# EUROPEAN PATENT APPLICATION

(11) **EP 4 711 871 A1**
(43) Date of publication of application: **18.03.2026**
(21) Application number: 25202013.6
(22) Date of filing: 12.09.2025
(51) Int. Cl.: G05B 19/418, G06N 20/00

(54) **MANUFACTURING INSPECTION SYSTEMS AND ASSOCIATED METHODS**

(30) Priority: 12.09.2024 US 202418883077
(71) Applicant: RTX Corporation, Farmington, CT 06032 (US)
(72) Inventor: GUO, Changsheng, Farmington (US); ALBINO, Hermitt Vega, Farmington (US)
(74) Representative: Dehns

(57) **Abstract**

A system (20) for inspecting a gas turbine engine component (23) includes an inspection environment (22) operable to access feature information associated with a component design (36). The feature information includes a unique identifier (40) assigned to a respective geometric feature (38) of the component design (36). The environment (22) is operable to access one or more inspection criterion (47) associated with the unique identifier (40). The environment (22) is operable to access process information (45) obtained during manufacturing of a physical instance of the respective geometric feature (38) according to one or more manufacturing parameters (48). The environment (22) is operable to generate, using a machine learning model (50), a prediction of whether the physical instance of the respective geometric feature (38) meets the one or more inspection criterion based (47) on the process information (45) . A method for inspecting a component is also disclosed.

## Description

### TECHNICAL FIELD

This disclosure relates to inspecting components, such as gas turbine engine components.

### BACKGROUND

Gas turbine engine components such as airfoils may include complex geometries. The component may be manufactured according to a computer-aided design (CAD) model. The as-manufactured component may be physically inspected to determine one or more dimensions, which may be compared to manufacturing tolerances, for determining whether the component passes or fails inspection.

### SUMMARY

A system for inspecting a gas turbine engine component may include one or more processors coupled to memory. The one or more processors may be collectively operable to execute an inspection environment. The inspection environment may be operable to access feature information associated with a component design. The feature information may include a unique identifier assigned to a respective geometric feature of the component design. The inspection environment may be operable to access one or more inspection criterion associated with the unique identifier. The inspection environment may be operable to access process information obtained during manufacturing of a physical instance of the respective geometric feature according to one or more manufacturing parameters. The inspection environment may be operable to generate, using a machine learning model, a prediction of whether the physical instance of the respective geometric feature meets the one or more inspection criterion based on the process information. The inspection environment may be operable to generate an indicator associated with the prediction.

In any implementations, the feature information may include at least one of the following: a geometry of the geometric feature, a dimension of the geometric feature, and a tolerance associated with the dimension.

In any implementations, the one or more inspection criterion may include at least one of the following: the tolerance associated with the dimension; and one or more manufacturing acceptance criterion.

In any implementations, the inspection environment may be operable to cause the one or more manufacturing parameters to be adjusted based on the prediction. The inspection environment may be operable to generate, using the machine learning model, a prediction of whether another physical instance of the respective geometric feature manufactured according to the adjusted one or more manufacturing parameters meets the one or more inspection criterion.

In any implementations, the inspection environment may be operable to access one or more manufacturing repositories including a manufacturing execution repository. Entries in the one or more manufacturing repositories may be associated with unique identifiers assigned to respective geometric features of one or more component designs to establish a set of digital threads linking the respective entries across the one or more manufacturing repositories by the respective unique identifier. The manufacturing execution repository may include one or more instructions to manufacture the respective geometric features of the one or more component designs. The one or more manufacturing parameters may include the respective one or more instructions associated with manufacture of the physical instance of the respective geometric feature. The inspection environment may be operable to identify an entry in the manufacturing execution repository assigned the unique identifier including the respective one or more instructions utilized to manufacture the physical instance of the respective geometric feature. The prediction may be based on the identified entry.

In any implementations, the machine learning model may be operable to generate the prediction without any physical inspection information corresponding to the physical instance of the geometric feature.

In any implementations, machine learning model may include a neural network.

In any implementations, training data utilized to train the machine learning model may include the prediction associated with a prior physical instance of manufacturing the geometric feature.

In any implementations, training data utilized to train the machine learning model may include inspection information obtained during physical inspection of the prior instance of manufacturing the geometric feature.

In any implementations, the component design may be associated with a gas turbine engine component.

A non-transitory computer-readable medium having computer-executable instructions that, when executed by one or more processors, may cause the one or more processors to collectively execute an inspection environment. The inspection environment may be operable to access feature information associated with a component design. The feature information may include a unique identifier assigned to a respective geometric feature of the component design. The inspection environment may be operable to access one or more inspection criterion associated with the unique identifier. The inspection environment may be operable to access process information obtained during manufacturing of a physical instance of the respective geometric feature according to one or more manufacturing parameters. The inspection environment may be operable to generate, using a machine learning model, a prediction of whether the physical instance of the respective geometric feature meets the one or more inspection criterion based on the process information. The inspection environment may be operable to generate an indicator associated with the prediction.

In any implementations, the feature information may include at least one of the following: a geometry of the geometric feature, a dimension of the geometric feature, and a tolerance associated with the dimension. The one or more inspection criterion may include the tolerance associated with the dimension. The indicator may be associated with the tolerance.

In any implementations, the inspection environment may be operable to cause the one or more manufacturing parameters to be adjusted based on the prediction. The inspection environment may be operable to generate, using the machine learning model, a prediction of whether another physical instance of the respective geometric feature manufactured according to the adjusted one or more manufacturing parameters meets the one or more inspection criterion.

In any implementations, the machine learning model may include a neural network.

A method for inspecting a component may include accessing feature information associated with a component design including a geometric feature associated with a respective unique identifier. The method may include accessing one or more inspection criterion associated with the unique identifier. The method may include manufacturing a physical instance of the respective geometric feature of a component according to one or more manufacturing parameters. The method may include accessing process information obtained during the manufacturing that may be associated with the unique identifier. The method may include generating, using machine learning, a prediction of whether the physical instance of the respective geometric feature meets the one or more inspection criterion based on the process information and/or the one or more manufacturing parameters. The method may include accepting or rejecting the physical instance of the component based on the prediction.

In any implementations, the one or more inspection criterion may include a dimension and/or a tolerance associated with the unique identifier.

In any implementations, the method may include accessing one or more manufacturing repositories including a manufacturing execution repository. Entries in the one or more manufacturing repositories maybe associated with unique identifiers assigned to respective geometric features of one or more component designs to establish a set of digital threads linking the respective entries across the one or more manufacturing repositories by the respective unique identifier. The method may include determining the digital thread associated with the physical instance of the respective geometric feature. The method may include identifying an entry in the manufacturing execution repository associated with the determined digital thread. The entry may include one or more instructions utilized to manufacture the physical instance of the respective geometric feature. The prediction may be based on the one or more instructions associated with the identified entry.

In any implementations, the method may include training a machine learning model based on information in the one or more manufacturing repositories. The generating step may be performed by the trained machine learning model.

In any implementations, the method may include adjusting the one or more manufacturing parameters. The method may include repeating the manufacturing step according to the adjusted one or more manufacturing parameters to manufacture another physical instance of the component. The method may include repeating the generating step for the geometric feature associated with the another physical instance.

In any implementations, the component design may be associated with a gas turbine engine component.

The present disclosure may include any one or more of the individual features disclosed above and/or below alone or in any combination thereof.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 discloses an inspection system.
Figure 2 discloses a perspective view of a gas turbine engine component.
Figure 3 discloses a machine learning model according to an implementation.
Figure 4 discloses a method of inspecting a component.

Like reference numbers and designations in the various drawings indicate like elements.

### DETAILED DESCRIPTION

The disclosed systems and methods relate to manufacturing data-driven part inspection.

To meet product manufacturing information (PMI) requirements, components (e.g., parts) may be inspected between manufacturing steps and/or after finishing the component (e.g., once finish machining is completed). The parts may be accepted or rejected. Rejection may lead to costly rework based on the inspection results. Post-machining inspection results may be obtained too late to make decisions for performing in-situ adjustment to the manufacturing processes or setups to produce parts that pass inspection. The disclosed techniques may be utilized to predict whether part geometry and/or dimensions meet inspection criteria using process data captured while (e.g., prior) instances of the part are being manufactured.

The disclosed techniques may be utilized for rapid part inspection using manufacturing data embedded with a feature level digital thread (FLDT) while (e.g., prior) instances of the part is being manufactured (e.g., machined). Machine learning (ML) may utilize information of FLDT-enabled manufacturing data to predict part dimensions. The digital thread may connect the various information sources to universal unique identifiers (UUIDs) of the respective geometric features of the parts. Data from process monitoring, machine health monitoring and/or as-executed instructions (e.g., G-codes), process parameters (e.g., speed, feed) may be embedded with UUIDs associated with respective the geometric features. The data linked with the UUIDs may be used to train one or more ML learning models. Data from similar parts may be utilized to train the ML model. The output of the ML model may include the dimensions of the part, and process parameter adjustment(s), if needed, to produce part features within specification.

The disclosed inspection systems and methods may be utilized to automatically inspect physical components (e.g., parts) by using manufacturing data embedded with FLDT. One or more inspection criterion may be associated with the geometric feature(s) to be inspected, such as the leading edge of an airfoil. The disclosed inspection systems and methods may be utilized to determine (e.g., predict or infer) whether individual geometric features of a physical part (e.g., edge, face, hole, etc.) meet one or more (e.g., predefined) inspection criterion. The component may be associated with a model-based definition (MBD) including design features with associated UUIDs. UUIDs may be assigned to each of the geometric features of a component design. The UUIDs may be associated with various information sources, such as manufacturing and/or quality databases, to establish respective FLDTs. The part geometry from a virtual (e.g., CAD) model of the part and associated PMI may be associated with respective UUIDs.

The components may be manufactured or otherwise formed (e.g., produced) using one or more manufacturing devices, such as a computer numerical control (CNC) milling machine. A program (e.g., subroutine) operable to control the manufacturing device may include many instructions (e.g., lines of code). A subset of the instructions may be unique to a particular geometric feature of the MBD and/or may be associated with respective UUID(s). The subset of instructions may be associated with only one UUID, or may be associated with two or more UUIDs, which when executed may produce the respective part(s).

Machine learning (ML) model(s) may be utilized to predict whether a manufactured part meets various inspection characteristics (e.g., criteria). The machine learning model may be a neural network. Various information may be utilized to train the model, including any of the information sources (e.g., repositories) disclosed herein. The ML model may generate the prediction based on one or more manufacturing parameters, including the associated manufacturing instructions, process parameters and/or other parameters associated with the manufacturing environment, and process data collected using sensors such as spindle power, vibration, etc. The prediction may occur at the feature level of the part. The ML model may be trained with similar components having the same or similar geometric features. The predictions from an output layer of the model may be fed back into an input layer of the model. The prediction may be utilized to adjust parameters for manufacturing the next part and/or adjust the next step(s) in the manufacturing process. The ML model may be operable to determine whether the final part may be acceptable or not (e.g., in or out of tolerance).

A geometric feature may correspond to the physical geometry of the part. A geometric feature may be described by multiple characteristics. A characteristic may be associated with a nominal dimension and tolerances. The characteristics may include geometry and/or tolerancing information. The characteristics may be characterized, which may be measured and/or predicted. This may include dimension(s) of the finished part and/or acceptance of the part (e.g., non-destructive testing). Using a computed tomography (CT) inspection technique to perform non-destructive testing may be very time consuming. Use of the ML model to predict whether the geometric feature(s) may meet the respective inspection characteristics may reduce inspection time.

The disclosed techniques may be utilized to avoid or otherwise reduce the need for physical part inspection between and/or subsequent to the various manufacturing steps. Physical inspection may be reduced and/or eliminated as the inspection characteristics become stable and there is a relatively high confidence in the prediction. The inspection data may be utilized to further train the machine learning model. A physical inspection of the final part may still be performed after training the model.

The techniques disclosed herein may be utilized to reduce inspection time and/or resources. The disclosed systems and methods may reduce scrap and/or rework because it can detect abnormality earlier, which may reduce cost.

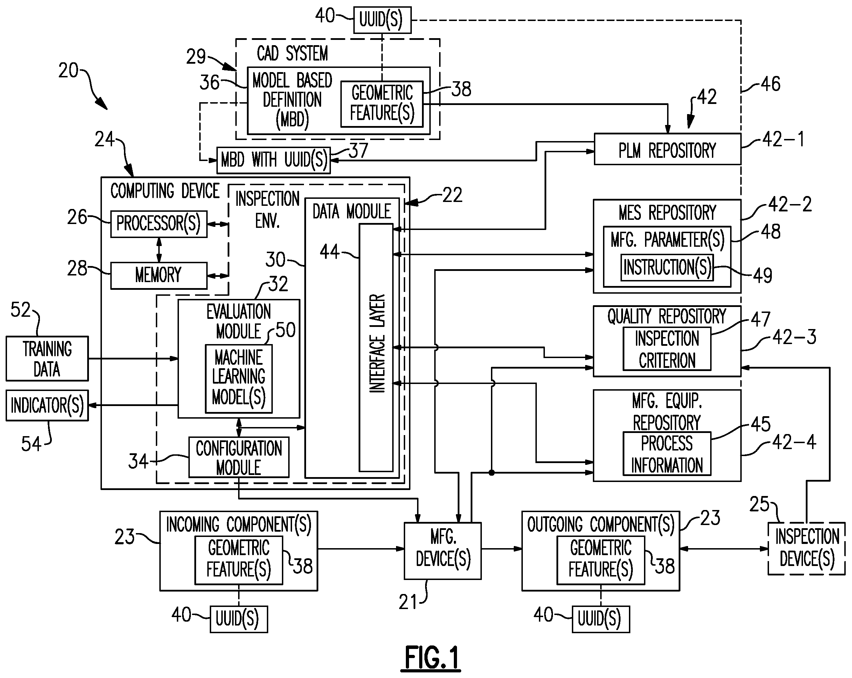

Figure 1 discloses an inspection system 20 according to an implementation. The inspection system 20 may be utilized to (e.g., virtually or indirectly) inspect various as-manufactured physical components (e.g., parts), including one or more gas turbine engine components. The gas turbine engine components may include components of a propulsor, compressor, combustor and/or turbine, including airfoils and other parts having various geometries. The inspection system 20 may be operable to determine (e.g., predict or infer) whether the physical component(s) 23 meet one or more (e.g., predefined) inspection criterion prior to, or otherwise independent of, physically inspecting the geometric feature(s) 38 of the physical component 23.

The system 20 may include an inspection environment 22. The inspection environment 22 may be operable to communicate with one or more manufacturing devices 21. The manufacturing device(s) 21 may be operable to manufacture, produce or otherwise form one or more physical (e.g., manufactured) components (e.g., parts) 23. Various manufacturing devices may be utilized, including milling devices such as CNC machines, additive manufacturing devices such as three-dimensional (3D) printers, injection molding machines, laser cutting machines, lathes, grinding machines, welding devices, and/or surface (e.g., heat) treatment devices. The inspection environment 22 may be operable to inspect the component(s) 23.

The inspection environment 22 may be operable to communicate with one or more inspection devices 25. The inspection device(s) 25 may be operable to physically inspect the components 23. The inspection device(s) 25 may include one or more sensors (e.g., probes, lasers, cameras, etc.) for performing an inspection. Various inspection devices 25 may be utilized, including a coordinate measurement machine (CMM). The system 20 may be operable to inspect the physical component 23 by comparing the physical geometry to the corresponding as-designed geometry and associated constraints (e.g., dimensions, tolerances, etc.).

The system 20 may include one or more computing device(s) 24 operable to execute the inspection environment 22. The computing device 24 may include one or more computer processors 26, memory 28, storage means, network devices, input and/or output devices, and/or interfaces. The processor(s) 26 may be coupled to the memory 28. The processor(s) 26 may be collectively operable to execute the inspection environment 22. The computing device 24 may be operable to execute one or more software programs, including one or more portions of the inspection environment 22. The computing device 24 may be operable to communicate with one or more networks established by one or more computing devices. The memory may include UVPROM, EEPROM, FLASH, RAM, ROM, DVD, CD, a hard drive, cloud storages, or other computer readable medium which may store data and/or the functionality of this description. The computing device 24 may be a desktop computer, laptop computer, smart phone, tablet, or any other computing device. Input devices may include a keyboard, mouse, touchscreen, etc. The output devices may include a monitor, speakers, printers, etc. The functionality of the inspection environment 22 and/or methods disclosed herein may be stored in a non-transitory computer-readable medium, including any of the memory devices disclosed herein. The non-transitory computer-readable medium may have computer-executable instructions that, when executed by the one or more processors 26, may cause the processor(s) 26 to individually and/or collectively execute the inspection environment 22 to perform any of the functionality disclosed herein.

The inspection environment 22 may include one or more modules. In implementations, the inspection environment 22 may include a first (e.g., data or interface) module 30, a second (e.g., evaluation) module 32 and/or a third (e.g., configuration) module 34. Although three modules are disclosed, the inspection environment 22 may include fewer or more than three modules and the functionality of the modules may be combined and/or separated to provide the disclosed functionality.

Each component 23 may be associated with a respective component design 36, which may be specified by a respective MBD. The component design 36 may be associated with any of the components disclosed herein, including a gas turbine engine component and/or assembly. The MBD 36 may include a three-dimensional CAD model, model derivative(s) and/or associated PMI. The CAD model may be generated by a CAD system 29 (e.g., CATIA, AutoCAD, Solidworks or Siemens NX). The PMI may include various information including tolerances and/or other dimensional requirements, material requirements, etc. The component design 36 and/or associated physical component 23 may include one or more component (e.g., geometric) features 38. The CAD model may include a virtual representation of the component 23 and respective geometric features 38. The physical component 23 may be manufactured based on the geometry and any associated attributes specified by the component design 36. The geometric features 38 may have various characteristics, including one or more dimensions (e.g., width, length, diameter, etc.). In implementations, the characteristics may be assigned their own UUIDs 40.

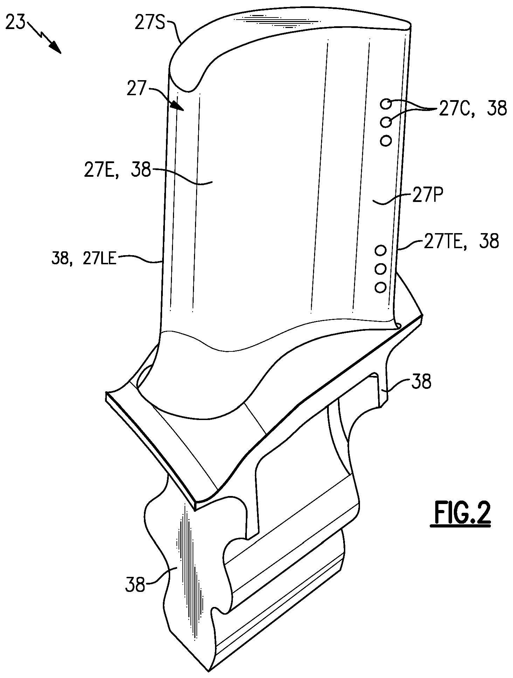

In the implementation of Figure 2, the component 23 may include an airfoil 27 having geometric features 38 such as an airfoil leading edge 27LE, pressure side 27P, suction side 27S, trailing edge 27TE, external surface contour 27E, cooling features (e.g., passages) 27C, etc. The disclosed techniques may be utilized to inspect other components of a gas turbine engine and/or components of other systems having various geometries.

Still referring to Figure 1, the data module 30 may be operable to interface with (e.g., access) one or more systems and/or information (e.g., data) sources, including one or more (e.g., manufacturing) repositories 42. The repositories 42 may contain all the Design, Manufacturing, and Inspection (DMI) data associated with the component design(s) 36 and may be linked to the geometric features 38 and/or associated characteristics of the MBD 36 for one or more components 23. The DMI data may be stored in various formats and may be stored in various databases and/or cloud-based storage, including Industry 4.0 (IO4.0) compliant formats.

The repositories 42 may include a product lifecycle management (PLM) repository 42-1, a manufacturing execution system (MES) repository 42-2, a quality repository 42-3 and/or a manufacturing equipment repository 42-4. Data and other information may be stored in the repositories 42 using various formats and data structures. In implementations, the repositories 42 may include one or more (e.g., relational) databases including one or more entries associated with information. The entries may store the information and/or may include link(s) to the information. The PLM repository 42-1 may include an overarching data store. The MES repository 42-2 may include information relating to fabrication of parts, including operation logs and one or more instructions to manufacture the part(s). The quality repository 42-3 may include information associated with the physical component(s) 23 and/or associated component design(s) 36. The manufacturing equipment (e.g., connected factory) repository 42-4 may include information associated with a manufacturing environment, including an environment of the respective manufacturing device(s) 21. The manufacturing equipment repository 42-4 may include information relating to collected signals from the manufacturing equipment, such as running speed, temperature, and/or pressure, which may be utilized to determine quality issues with parts. It should be understood that the data module 30 may be operable to interface with fewer or more than four repositories, and information associated with the repositories may be stored in one or more memory devices.

The data module 30 may include an interface layer 44. The interface layer 44 may be operable to access information stored in the repositories 42. The interface layer 44 and/or another portion of the data module 30 may be operable to access the repositories 42. Entries in the repositories 42 may be associated with UUIDs 40 assigned to respective geometric features 38 of one or more component design(s) 36 to establish a set of (e.g., feature level) digital threads 46. The digital threads 46 may link the respective MBD(s) 36 and entries across the repositories 42 by the respective UUIDs 40. The digital thread 46 may be a logical connection of information associated with the same UUID 40 or may be a set of links to the information. The digital threads 46 may provide data traceability across the repositories 42 and associated data sets, including the DMI data. The interface layer 44 and/or another portion of the data module 30 may be operable to read, write, edit, store and/or otherwise access information in the manufacturing repositories 42 based on the respective UUIDs 40. One would understand how to program the interface layer 44 with logic to interface with the manufacturing repositories 42.

The interface layer 44 and/or another portion of the data module 30 may be operable to access feature information associated with the component design(s) 36. The feature information may include a geometry of the respective geometric feature 38. In implementations, the feature information may include three-dimensional CAD geometry and/or PMI associated with the respective features 38 of the component design 36. The feature information may include various attributes including dimension(s) and/or tolerance(s) associated with the geometric feature(s) 38. The feature information may include UUID(s) 40 assigned to the respective geometric feature(s) 38. In implementations, the feature information may include information stored in one or more of the repositories 42 associated with the respective UUID 40. Information in the repositories 42 may be stored in different formats. The interface layer 44 may be operable to access information in the repositories 42 using various techniques, such as knowledge graph(s) and/or ontology based data integration. An ontology may be utilized to crosswalk the data structures and linkages. The CAD system 29 may be operable to store the component design 36 and/or associated UUIDs 40 in the PLM repository 42-1.

The MES repository 42-2 may be operable to store one or more manufacturing parameters 48, including any of the parameters disclosed herein. The manufacturing parameters may include a configuration (e.g., type, model, condition, etc.) of the respective manufacturing device 21. The manufacturing parameters 48 may include one or more manufacturing instructions 49. Sets of the manufacturing instructions 49 may establish one or more subroutines. The instructions 49 may be associated with manufacture of physical instance(s) of the respective geometric feature(s) 38 of the component design(s) 36. Each manufacturing instruction 49 and/or set of instructions 49 may be associated with one or more of the UUIDs 40. Each set of instructions (e.g., subroutine) 49 in the MES repository 42-2 may be associated with only, or more than one, one of the respective UUID 40. The instructions 49 may be operable to control or otherwise cause the manufacturing device(s) 31 to manufacture the component 23 and/or associated geometric feature(s) 38. The instructions 49 may be operable to control the manufacturing device 21 to manufacture or otherwise form a physical instance of one or more geometric feature(s) 38 of an associated physical component 23, which may be associated with the respective UUID(s) 40.

The configuration module 34 may be operable to set (e.g., adjust) one or more of the manufacturing parameters 48, including one or more of the manufacturing instructions 49 and/or associated parameter(s), which may be used by the manufacturing device 21 to manufacture one or more components 23. The parameter(s) 48 set (e.g., adjusted) by the configuration module 34 may be stored in the MES repository 42-2.

The interface layer 44 and/or another portion of the data module 30 may be operable to access process (e.g., monitoring) information 45. The process information 45 may be associated with a manufacturing environment, including the environment of the respective manufacturing device(s) 21. The process information 45 may be obtained (e.g., collected) during manufacture of physical instance(s) of the respective geometric feature(s) 38 of the component(s) 23, which may be according to one or more respective manufacturing parameters 48. The process information 45 may be associated with one or more UUIDs 40 assigned to the geometric feature(s) 38 of the respective component design 36.

The process information 45 may include one or more process parameters. The process parameters may be controlled or otherwise set prior to, during and/or subsequent to manufacture of the physical component(s) 21. The process parameters may be defined in the manufacturing instruction(s) 49 (e.g., CNC program). An operator of the manufacturing device 21 may override the instruction(s) 49 (e.g., slow down the device 21). The process parameters may be monitored during execution of the respective instruction(s) 49 to operate the manufacturing device 21. Other process parameters may not be directly controlled, such as vibration, temperature, noise, etc., which may flow out of the manufacturing process.

The interface layer 44 and/or another portion of the data module 30 may be operable to access one or more inspection criterion 47. The inspection criterion 47 may be associated with one or more UUIDs 40 assigned to the geometric feature(s) 38 of the respective component design 36. Each inspection criterion 47 may be stored in the quality repository 42-3. Various inspection criterion 47 may be utilized. The inspection criterion 47 may include tolerance(s) associated with the dimension(s) of the respective geometric feature(s) 38. The inspection criterion 47 may include one or more manufacturing acceptance criterion (MAC). Manufacturing acceptance criteria may include limits (e.g., conditions) that an entity may set on the characteristics of physical components to ensure that the components meet manufacturing and/or servicing requirements. The acceptance criteria may need to be met before the component may be considered finished (e.g., complete).

The evaluation module 32 may be operable to determine (e.g., predict or infer) whether physical instance(s) of the geometric feature(s) 38 of the (e.g., outgoing or finished) component(s) 23 meet one or more respective inspection criterion 47. The evaluation module 32 may be operable to make the determination based on any of the techniques and/or information disclosed herein.

The evaluation module 32 may utilize various techniques to determine (e.g., predict or infer) whether the inspection criterion or criteria 47 are met, including any of the techniques disclosed herein. The evaluation module 32 may be operable to infer the geometry and/or associated characteristics (e.g., dimensions) of the geometric feature(s) 38 of the physical component(s) 23. The evaluation module 32 may be operable to perform the inference based on more associated manufacturing and/or process parameters and/or information, including any of the parameters and/or information disclosed herein. The evaluation module 32 may be operable to directly and/or indirectly compare the inferred geometry and/or associated characteristics to the as-designed geometric feature(s) 38 associated with the respective component design 36. The evaluation module 32 may be operable to determine whether the inspection criterion or criteria are met based on the comparison.

The inspection environment 22 may include various artificial intelligence (AI) functionality for determining whether physical instance(s) of the geometric feature(s) 38 of the (e.g., outgoing or finished) component(s) 23 meet one or more respective inspection criterion 47. The inspection environment 22 may include, or may otherwise interface with, one or more machine learning (ML) models 50. **In** implementations, the evaluation module 32 may include one or more model(s) 50. The ML model(s) 50 may be operable to perform the inference(s) and/or comparison(s) associated with the geometry of the as-manufactured geometric feature(s) 38.

The ML model(s) 50 and/or another portion of the inspection environment 22 may be operable to generate a prediction (e.g., inference) of whether the physical instance of the respective geometric feature(s) 38 meets the one or more respective inspection criterion 47. The model 50 may be operable to generate prediction(s) prior to, or otherwise independent of, physically inspecting the geometric feature(s) 38 of the physical component 23. The model 50 may be operable to determine (e.g., predict or infer) whether the one or more inspection criterion 47 are met in response to evaluating one or more of the entries in the repositories 42 with respect to the geometric feature(s) 38 and/or associated PMI, which may be associated with a respective (e.g., common) UUID 40.

The evaluation module 32 may be operable to identify one or more entries in the MES repository 42-2 assigned the UUID(s) 40 including the respective instruction(s) 49 utilized (e.g., operable) to manufacture the physical instance(s) of the respective geometric feature(s) 38. The model 50 may be operable to generate the prediction(s) based on the identified entry or entries.

In implementations, the ML model 50 may be operable to generate the prediction(s) based on the process information 45, which may be associated with the UUID(s) 40 assigned to the geometric feature(s) 38.

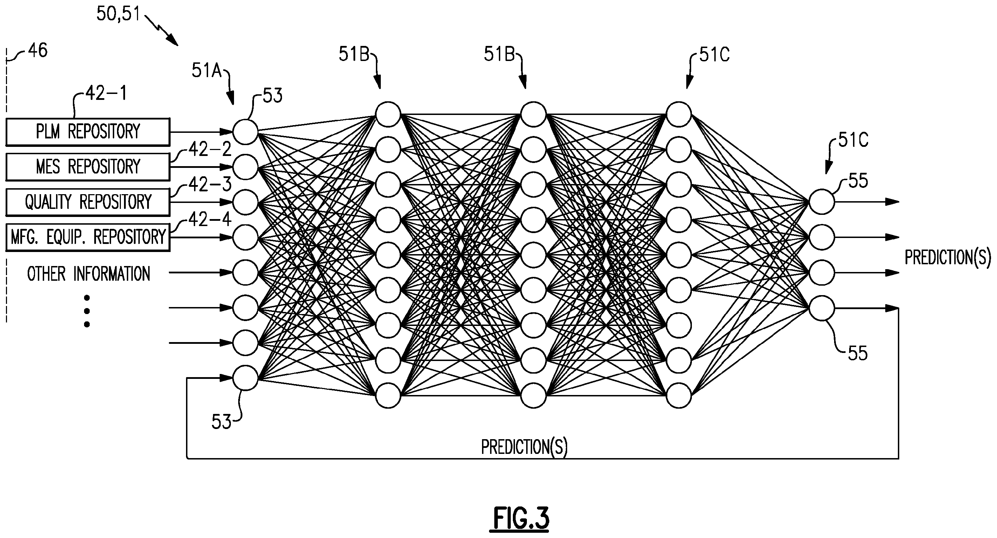

Various machine learning models may be utilized. In implementations, the ML model 50 may include one or more artificial neural networks (ANNs). Figure 3 discloses an implementation of a neural network 51. The neural network 51 may include an input layer 51A, one or more intermediate (e.g., hidden) layers 51B, and an output layer 51C. The data module 30 may be operable to communicate information to one or more input nodes 53 of the input layer 51A, including any of the information disclosed herein. The output layer 51C may include one or more output nodes 55 operable to generate the prediction(s). The model 50 may be trained or otherwise associated with training data 52. The model 50 may be trained utilizing various supervised and/or unsupervised techniques based on the training data 52. The model 50 may be established based on training data 52, which may include supervised and/or unsupervised training set(s). The machine learning model 50 may be trained utilizing information in the repositories 42, including sets of information associated with the same UUIDs 40 and/or digital threads 46. Supervision may include indicating whether the model 50 correctly or incorrectly determines (e.g., predicts or infers) whether the physical instance(s) of the respective geometric feature(s) 48 of the component(s) 23 meet the one or more respective inspection criterion 47.

Physical inspection information may be obtained (e.g., collected) from physical inspection of one or more previously manufactured components 23. The inspection device(s) 25 may obtain the inspection information. The inspection information may be stored in the quality repository 42-3. The inspection information may be communicated to the input layer 51A of the model 50 (Figure 3). The training data 52 may include (e.g., previous) inspection information obtained during physical inspection of (e.g., prior) instance(s) of manufacturing the geometric feature(s) 38 of the component(s) 23. In implementations, the machine learning model 50 may be operable to generate the prediction(s) without any physical inspection information corresponding to the physical instance of the respective geometric feature(s) 38. The inspection device(s) 25 may be omitted. The physical inspection information may be utilized to validate the prediction(s).

The training data 52 may include one or more (e.g., prior) predictions associated with prior physical instance(s) of manufacturing the geometric feature(s) 38 of the respective component(s) 23. Prediction(s) from one or more output nodes 55 of the output layer 51C of the model 50 may be communicated to one or more input nodes 53 of the input layer 51A of the model 50 (e.g., Figure 3).

The ML model(s) 50 may be operable to adjust one or more manufacturing parameters 48 to cause a change in operation of the manufacturing device(s) 21 prior to, during and/or subsequent to the manufacture of one or more of the components 23. In implementations, the model 50 may be operable to cause the manufacturing parameter(s) 48 to be adjusted based on a prediction associated with a physical instance of the geometric feature(s) 38 of the component 23. The model 50 may be operable to generate a (e.g., subsequent) prediction of whether another physical instance of the respective geometric feature(s) 38 (e.g., of the next component 23) manufactured according to the adjusted manufacturing parameter(s) 48 meets the one or more respective inspection criterion 47.

The evaluation module 32 may be operable to generate one or more indicator(s) 54 associated with the respective prediction(s). The indicator 54 may be associated with tolerance(s) assigned to dimension(s) of the respective geometric feature(s) 38. Various indicators may be utilized. In implementations, the indicator may provide an indication of whether or not the as-manufactured geometric feature(s) 38 meet the one or more inspection criterion 47 (e.g., pass or fail).

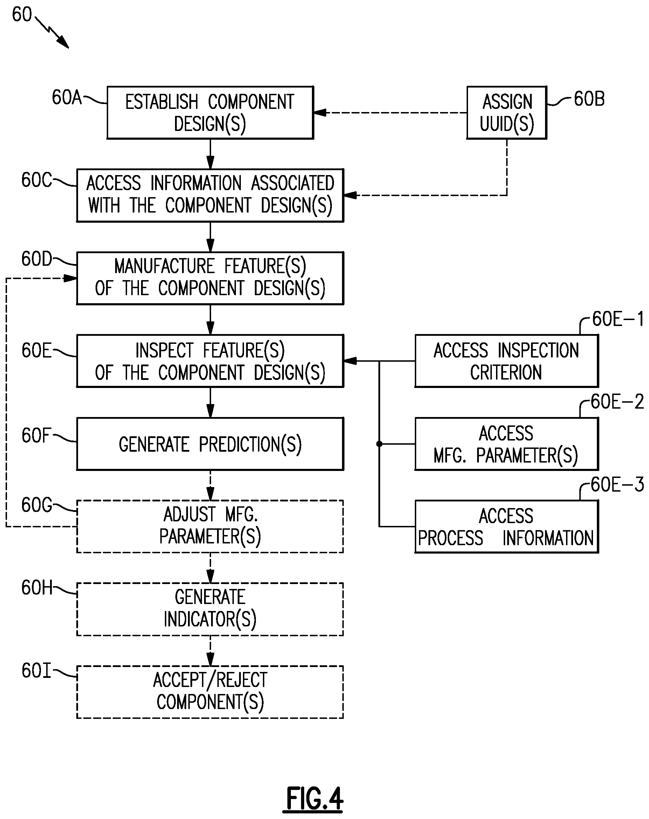

Figure 4 discloses a method in a flowchart 60 for (e.g., non-physically or indirectly) inspecting component(s) according to an implementation. The method 60 may be utilized to inspect various physical (e.g., as-manufactured) components, including any of the gas turbine engine components and associated features disclosed herein, such as the component 23. The method 60 may be performed without direct measurement of the geometry and/or other characteristics of the as-manufactured component. Fewer or additional steps than are recited below could be performed within the scope of this disclosure, and the recited order of steps is not intended to limit this disclosure. The inspection environment 22 may be programmed with logic for performing the method 60. Reference is made to the component 23 and inspection system 20.

At block 60A, one or more component designs 36 may be established. The component design 36 may include one or more geometric features 38. The component design 36 may be associated with a component, such as the component 23. The component design 36 may be associated with a gas turbine engine component. In implementations, the component design 36 may include a MBD and associated PMI. At block 60B, UUID(s) 40 may be assigned to, or may otherwise be associated with, the respective geometric feature(s) 38. In implementations, the UUID(s) 40 may be provided with the respective CAD model. The UUID(s) 40 may be assigned with software using CAD and/or a CAD derivative such as STEP.

At block 60C, feature information associated with the geometric feature(s) 38 of the component design 36 may be accessed. The feature information may include any attributes and/or other information associated with the geometric feature(s) 38. UUID(s) 40 may be assigned to, or may otherwise be associated with, the respective feature information at block 60B.

At block 60D, physical instance(s) of one or more geometric feature(s) 38 of component(s) 23 may be manufactured (e.g., produced) or otherwise formed. The features 38 may be associated with respective UUIDs 40. The physical (e.g., as-manufactured) component 23 may be associated with a respective component design 36 and/or UUID 40. Block 60D may include manufacturing, with one or more manufacturing devices (e.g., machines) 21, a physical instance of the respective geometric feature(s) 38 of the component 23 according to one or more manufacturing parameters 48, which may include one or more instructions 49. The instructions 49 may be associated with the respective UUID(s) 40.

At block 60E, the geometric feature(s) 38 of the component(s) 23 may be (e.g., virtually or indirectly) inspected. The features 38 may be inspected utilizing any of the techniques disclosed herein. Block 60E may include accessing one or more inspection criterion, which may be associated with the respective UUID 40, at block 60E-1. The inspection criterion or criteria 47 may include one or more dimensions and/or tolerances associated with the UUID 40. Block 60E may include accessing one or more manufacturing parameters 48, which may be associated with the respective UUID 40, at block 60E-2. Block 60E may include accessing one or more process information 45, which may be associated with the respective UUID 40, at block 60E-3. The process information 45 may be obtained during the manufacturing of the feature(s) 38 of the component 23 at block 60D.

Block 60E may include accessing one or more manufacturing repositories 42, which may include the MES repository 42-2. Entries in the manufacturing repositories 42 may be associated with UUIDs 40 assigned to respective geometric features 38 of the component design(s) 36 to establish a set of digital threads 46. The digital threads 46 may link the respective entries across the manufacturing repositories 42 by the respective UUID 40. Block 60E may include determining the digital thread 46 associated with the physical instance of the respective geometric feature(s) 38. Block 60E may include identifying one or more entries in the MES repository 42-2 associated with the determined digital thread 46. The entry may include one or more instructions 49 utilized to manufacture the physical instance of the respective geometric feature(s) 38 of the component 23 at block 60D. The method 60 may include training one or more ML models 50 utilizing any of the techniques disclosed herein. In implementations, the ML model 50 may be trained based on information in the manufacturing repositories 42.

At block 60F, one or more predictions (e.g., inferences) may be generated based on the inspection performed at block 60E. In implementations, block 60F may include generating, using one or more ML models 50, a prediction of whether the physical instance of the respective geometric feature(s) 38 meet the one or more inspection criterion 37, which may be based on the process information 45. The prediction(s) may be based on the one or more instructions 49 associated with the identified entry or entries in the manufacturing execution repository 42-2. The prediction may include an indication of whether the dimensions of the as-manufactured feature(s) 38 are within the respective tolerance(s).

The prediction may be generated without direct measurement of the geometry, dimensions and/or other characteristics of the as-manufactured component 23. The prediction may be generated prior to, or otherwise independent of, any physical inspection of the geometric feature(s) 38 of the physical component 23. The prediction may serve as a final inspection of the as-manufactured component 23. **In** implementations, the method 60 may include physically inspecting the feature(s) 38 of the component 23. The prediction may be validated based on the physical inspection. **In** other implementations, physical inspection of the feature(s) 38 may be omitted. Physical inspection of the as-manufactured components may be omitted or otherwise reduced once the inspection characteristics become stable and/or a relatively high confidence in the predictions is achieved.

At block 60G, one or more of the manufacturing parameter(s) 48 may be adjusted or otherwise set based on the prediction(s) generated at block 60F. One or more iterations of manufacturing the feature(s) 38 at block 60D may be repeated according to the adjusted manufacturing parameter(s) 48 to manufacture another (e.g., subsequent) physical instance(s) of the component 23. One or more iterations of generating prediction(s) at block 60F may be repeated for the geometric feature(s) 38 associated with the subsequent physical instance(s) of the component 23.

At block 60H, one or more indicators 54 may be generated based on the respective prediction. The indicator 54 may be generated utilizing any of the techniques disclosed herein.

At block 60I, the physical (e.g., as-manufactured) instance of the component 23 may be accepted or rejected based on the respective prediction and/or associated indicator(s) 54.

It should be understood that relative positional terms such as "forward," "aft," "upper," "lower," "above," "below," and the like are with reference to the normal operational attitude of the vehicle and should not be considered otherwise limiting.

Although the different examples have the specific components shown in the illustrations, embodiments of this disclosure are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A system for inspecting a gas turbine engine component comprising:
one or more processors coupled to memory, the one or more processors collectively operable to execute an inspection environment, and the inspection environment operable to:
access feature information associated with a component design, the feature information including a unique identifier assigned to a respective geometric feature of the component design;
access one or more inspection criterion associated with the unique identifier;
access process information obtained during manufacturing of a physical instance of the respective geometric feature according to one or more manufacturing parameters;
generate, using a machine learning model, a prediction of whether the physical instance of the respective geometric feature meets the one or more inspection criterion based on the process information; and
generate an indicator associated with the prediction.

2. The system as recited in claim 1, wherein the feature information includes at least one of the following: a geometry of the geometric feature, a dimension of the geometric feature, and a tolerance associated with the dimension.

3. The system as recited in claim 2, wherein the one or more inspection criterion includes at least one of the following: the tolerance associated with the dimension; and one or more manufacturing acceptance criterion.

4. The system as recited in claim 1, 2 or 3, wherein the inspection environment operable to:
cause the one or more manufacturing parameters to be adjusted based on the prediction; and
generate, using the machine learning model, a prediction of whether another physical instance of the respective geometric feature manufactured according to the adjusted one or more manufacturing parameters meets the one or more inspection criterion, and/or wherein the inspection environment is operable to:
access one or more manufacturing repositories including a manufacturing execution repository, wherein:
entries in the one or more manufacturing repositories are associated with unique identifiers assigned to respective geometric features of one or more component designs to establish a set of digital threads linking the respective entries across the one or more manufacturing repositories by the respective unique identifier;
the manufacturing execution repository includes one or more instructions to manufacture the respective geometric features of the one or more component designs; and
the one or more manufacturing parameters include the respective one or more instructions associated with manufacture of the physical instance of the respective geometric feature; and
identify an entry in the manufacturing execution repository assigned the unique identifier including the respective one or more instructions utilized to manufacture the physical instance of the respective geometric feature, wherein the prediction is based on the identified entry.

5. The system as recited in any preceding claim, wherein the machine learning model is operable to generate the prediction without any physical inspection information corresponding to the physical instance of the geometric feature, and/or wherein the machine learning model includes a neural network.

6. The system as recited in any preceding claim, wherein:
training data utilized to train the machine learning model includes the prediction associated with a prior physical instance of manufacturing the geometric feature, optionally wherein:
training data utilized to train the machine learning model includes inspection information obtained during physical inspection of the prior instance of manufacturing the geometric feature.

7. A non-transitory computer-readable medium having computer-executable instructions that, when executed by one or more processors, cause the one or more processors to collectively execute an inspection environment operable to:
access feature information associated with a component design, the feature information including a unique identifier assigned to a respective geometric feature of the component design;
access one or more inspection criterion associated with the unique identifier;
access process information obtained during manufacturing of a physical instance of the respective geometric feature according to one or more manufacturing parameters;
generate, using a machine learning model, a prediction of whether the physical instance of the respective geometric feature meets the one or more inspection criterion based on the process information; and
generate an indicator associated with the prediction.

8. The non-transitory computer-readable medium as recited in claim 7, wherein:
the feature information includes at least one of the following: a geometry of the geometric feature, a dimension of the geometric feature, and a tolerance associated with the dimension;
the one or more inspection criterion includes the tolerance associated with the dimension; and
the indicator is associated with the tolerance.

9. The non-transitory computer-readable medium as recited in claim 7 or 8, the inspection environment is operable to:
cause the one or more manufacturing parameters to be adjusted based on the prediction; and
generate, using the machine learning model, a prediction of whether another physical instance of the respective geometric feature manufactured according to the adjusted one or more manufacturing parameters meets the one or more inspection criterion.

10. The non-transitory computer-readable medium as recited in any of claims 7 to 9, wherein the machine learning model includes a neural network.

11. A method for inspecting a component comprising:
accessing feature information associated with a component design including a geometric feature associated with a respective unique identifier;
accessing one or more inspection criterion associated with the unique identifier;
manufacturing a physical instance of the respective geometric feature of a component according to one or more manufacturing parameters;
accessing process information obtained during the manufacturing that is associated with the unique identifier;
generating, using machine learning, a prediction of whether the physical instance of the respective geometric feature meets the one or more inspection criterion based on the process information and/or the one or more manufacturing parameters; and
accepting or rejecting the physical instance of the component based on the prediction.

12. The method as recited in claim 11, wherein the one or more inspection criterion include a dimension and/or a tolerance associated with the unique identifier.

13. The method as recited in claim 11 or 12, further comprising:
accessing one or more manufacturing repositories including a manufacturing execution repository, wherein entries in the one or more manufacturing repositories are associated with unique identifiers assigned to respective geometric features of one or more component designs to establish a set of digital threads linking the respective entries across the one or more manufacturing repositories by the respective unique identifier;
determining the digital thread associated with the physical instance of the respective geometric feature; and
identifying an entry in the manufacturing execution repository associated with the determined digital thread, the entry including one or more instructions utilized to manufacture the physical instance of the respective geometric feature;
wherein the prediction is based on the one or more instructions associated with the identified entry.

14. The method as recited in claim 13, further comprising:
training a machine learning model based on information in the one or more manufacturing repositories;
wherein the generating step is performed by the trained machine learning model, and/or further comprising:
adjusting the one or more manufacturing parameters; and
repeating the manufacturing step according to the adjusted one or more manufacturing parameters to manufacture another physical instance of the component; and
repeating the generating step for the geometric feature associated with the another physical instance.

15. The system as recited in any of claims 1 to 6 or the method as recited in any of claims 11 to 14, wherein the component design is associated with a gas turbine engine component.
